# EUROPEAN PATENT APPLICATION

(11) **EP 4 633 247 A1**
(43) Date of publication of application: **15.10.2025**
(21) Application number: 24169430.6
(22) Date of filing: 10.04.2024
(51) Int. Cl.: H04W 52/02, H04W 4/70, H04W 76/27

(54) **UTILITY METER WITH CELLULAR COMMUNICATION INTERFACE**

(71) Applicant: Kamstrup A/S, 8660 Skanderborg (DK)
(72) Inventor: Poulsen, Jonas Drammestrup, 8660 Skanderborg (DK); Habbassy, Shekib, 8660 Skanderborg (DK)
(74) Representative: Plougmann Vingtoft a/s

(57) **Abstract**

A method for updating Subscriber Identity Module, SIM, information in a battery powered utility meter with an integrated modem for cellular communication. The modem is with intervals controlled to connect to a cellular network. When the modem is connected to the cellular network data is transmitted to a head end system. As a response the modem receives a first data message from the head end system via the cellular network. The modem is controlled to remain connected to the cellular network long enough to receive the response whereafter the modem enters Power Saving Mode or is powered off. The utility meter determines if the first data message comprises an indication that a Short Message Service message or a second data message containing Subscriber Identity Module update information is to be received by the modem via the cellular network during a second time period. If the first data message comprises said indication, the modem is controlled to enter RRC idle state and Discontinuous Reception mode or Extended Discontinuous Reception mode, during the second time period. Finally, the modem enter idle state and power saving mode or is powered off, at the end of the second time period.

## Description

### FIELD OF THE INVENTION

The present invention relates to the technical field of battery-operated utility meters comprising cellular communication interfaces and especially to maintenance of Subscriber Identification Module (SIM) information in such utility meters.

### BACKGROUND OF THE INVENTION

Modern utility meters such as water meters, thermal energy meters and gas meters are typically electronic utility meters with one or more integrated wireless communication interfaces for transmission of consumption data to a meter reading system.

Utility meters are normally powered from non-rechargeable batteries. Consequently, a finite amount of energy is available for the service cycle of the utility meter. A service cycle for a utility meter of typically 10-20 years is desirable. To reduce cost associated with meter exchange or battery replacement, energy conservation is a major design criterion.

The integrated communication interfaces may support different communication technologies. The recent widespread deployment of cellular communication infrastructures, such as NB-IoT and LTE-M, which are suitable for wireless communication with battery operated devices with a long service cycle, has made cellular communication one of the preferred technologies within the smart metering industry. Consequently, modern utility meters often comprise a cellular communication interface in the form of a cellular modem

To reduce energy consumption of the utility meter the cellular communication interface is powered off or set in Power Saving Mode (PSM) for the majority of the time. During that time, it is inaccessible via the cellular communication interface. When data is to be transmitted to the meter reading system the cellular communication interface will connect to the cellular communication infrastructure for the shortest possible time, whereafter it returns to an inaccessible state to reduce energy consumption.

Cellular communication networks, hereafter called cellular networks, are general purpose communication infrastructures commercialized by various service providers. To access the cellular networks a subscription is required. Such subscriptions are managed using a Subscriber Identity Module (SIM) which is included in each utility meter. The SIM contains information which allows the utility meter to authenticate itself to the cellular network established by different service providers. The information in the SIM also controls roaming behavior of the utility meter in relation to cellular networks controlled by different service providers. Due to changes in commercial relationships in between service providers or between a service provider and the utility company being the proprietor of the utility meter, update of the information stored in the SIM is required.

Update or maintenance of the SIM information is normally done using the Short Message Service (SMS) or by transmission of data messages to the utility meter. Receiving an SMS or data message does require that the utility meter remains connected to the cellular network for an extended period of time, which will increase energy consumption.

Hence, an improved method of updating SIM information in a utility meter would be advantageous, and in particular a more energy efficient and still reliable method would be advantageous.

### OBJECT OF THE INVENTION

In particular, it may be seen as an object of the present invention to provide a method that solves the above-mentioned problems of the prior art in the form of an energy efficient method for updating SIM information in a utility meter.

### SUMMARY OF THE INVENTION

Thus, the above-described object and several other objects are intended to be obtained in a first aspect of the invention by providing a method for updating Subscriber Identity Module (SIM) information in a battery powered utility meter arranged for measuring consumption of a utility, said utility meter comprising a modem for cellular communication and a controller arranged for controlling the modem, the method comprising the steps of:
A: with regular or irregular intervals controlling the modem to connect to a cellular network whereby the modem enters Radio Resource Control (RRC) connected state;
B: when the modem is connected to the cellular network transmitting data to a head end system and receiving a first data message from the head end system via the cellular network;
C: controlling the modem to remain in RRC connected state for a first time period, said first time period having a duration being long enough to execute step B, and after step B has been executed further controlling the modem to enter RRC idle state and Power Saving Mode (PSM) or powering off the modem;
D: determining if the first data message comprises an indication that a Short Message Service (SMS) message or a second data message containing Subscriber Identity Module (SIM) update information is to be received by the modem via the cellular network during a second time period;
E: if the first data message comprises said indication, controlling the modem to enter RRC idle state and/or one of Discontinuous Reception (DRX) mode or Extended Discontinuous Reception (eDRX) mode, during the second time period and further controlling the modem to enter RRC idle state and PSM or powering off the modem, at the end of the second time period or after the SIM update information has been received during the second time period.

The first aspect of the invention is especially advantageous because the modem does not need to remain connected to the cellular network after transmitting data to the head end system for a time period long enough to make sure that a pending SMS or pending data message could have been received. When SIM information needs to be updated an SMS or a data message comprising SIM update information will be prepared in a system controlled by the service provider, a broker or another operator. The SMS or data message will be pending in a server of the cellular network and transmitted to the utility meter via the cellular network when the modem is connected to the cellular network and communication capacity is available. However, since the modem is connected to the cellular network for the shortest possible period, during which transmission of data also takes place, it is very unlikely that the pending SMS or pending data message will be delivered to the modem before the modem is powered down or enters PSM whereafter it is inaccessible. Receiving an indication that a pending SMS or data message is to be received by the modem has the advantage that the modem may be connected to the cellular network for an extended but also limited period of time only when this is required due to the update of SIM information. Especially it is advantageous to let the modem enter idle state and DRX or eDRX to save energy while still being accessible for transmission of the SIM update information to the modem.

In step E, if the first data message does not comprises said indication, the modem is controlled to remain in RRC idle state and Power Saving Mode, PSM, or powered off optionally until the next regular or irregular interval. In other words, step E is executed when the first data message comprises said indication. This has the advantage that energy for keeping the modem connected is only used if e.g. an SMS is expected.

The indication that an SMS message containing SIM update information or a second data message containing SIM update information is to be received, may take the form of a data element in a payload or a header of the first data message. Said indication may be a simple bit field and/or a sequence of data bytes carrying information about a pending SMS carrying SIM update information or data message carrying SIM update information. Further, the indication may carry advanced information about e.g. time, duration, source or data channel relating to the transfer of SIM update information.

It is understood by the skilled person that the utility meter or the modem for cellular communication comprises a SIM. The SIM may be in the form of a SIM card, a chip SIM or a SW SIM. Furthermore, the method according to the first aspect of the invention may comprise an additional step of updating the SIM according to the SIM update information received during the second time period. By updating the SIM is understood updating the SIM information stored in the SIM according to the received SIM update information. SIM information and SIM update information may be the same type of information having different values e.g. the SIM update information may be a list of Public land mobile networks (PLMN) and/or a list of Service provider names (SPN) that shall replace or supplement a list of PLMSs and/or SPNs already stored in the SIM. Optionally the SIM update information is a subset of the SIM information stored in the SIM. SIM information / SIM update information may be any information normally stored in the SIM which enables or supports the modem to authenticate itself to the cellular network established by different service providerssuch and/or to select / prioritize between different cellular networks. Examples of SIM information / SIM update information may be one or more of: Service provider name (SPN), Public land mobile network (PLMN), International Mobile subscriber Identity (IMSI), encryption keys etc.

The steps of the method according to the first aspect of the invention does not need to be executed in a sequence as indicated e.g. by the naming of the steps. As an example step D may be executed before, after or simultaneously with step C.

The controller is arranged to control at least the modem. The controller may be arranged to control the modem and other elements of the utility meter to perform the steps of the method according to the first aspect of the invention. The controller may be a micro controller which is coupled to a memory, the memory comprising executable instructions stored thereon that when executed by the microcontroller cause the processor to effectuate the method according to the first aspect of the invention. Consequently, each of the steps A to E or the method as such according to the first aspect may be controlled and effectuated by the controller.

It is understood by the skilled person that the utility meter further comprises measurement circuits and sensors for measuring the consumption of the utility. The utility meter may include a flow sensor and / or temperature sensors connected to the controller which is arranged for calculating the amount of consumed utility based on data form the sensors. The utility meter may be a water meter, a gas meter a thermal energy meter a heat cost allocator, a flow meter or any other battery-operated utility meter.

The data transmitted to the head end system may be consumption data such as a consumed amount of a utility such as a volume of water or gas or an amount of consumed energy or a flow rate or an alarm.

In an alternative, the method according to the first aspect of the invention may be a method for operating a battery-operated sensor, such as an environmental sensor, a pressure sensor, a temperature sensor, a turbidity sensor, an acoustic sensor for acoustic leak detection, a level sensor or any other type of sensor. In such alternative the data transmitted to the head end system may be other data than consumption data such as a temperature, a pressure, turbidity data, acoustic data, a level, an alarm or other data relating to the sensor.

Optionally the modem for cellular communication is a cellular modem for NB-IoT and/or LTE-M communication and the cellular network is a network for NB-IoT and/or LTE-M communication. Communication using NB-IoT and/or LTE-M is especially advantageous because of a low energy consumption and a high link budget. NB-IoT may also be known as LTE CAT NB1 or LTE CAT NB2. LTE-M may also be known as LTE CAT M1 or LTE CAT M2. The modem may preferably be integrated into the utility meter or may in an alternative solution be connected to the utility meter via a wired or wireless connection. The modem may be a module which is integrated into the utility meter. The modem may be fully integrated into the utility meter and may share different electronic circuits with the utility meter such as micro controllers and power supply including batteries and / or capacitors. By a cellular network is understood a public cellular network using communication protocols as defined by 3GPP / ETSI.

Optionally the modem is controlled to enter RRC idle state and PSM or the modem is powered off in step C less than 1 second or preferably less than 0.5 second or even more preferably less than 0.1 second after step B has been executed. This has the advantage of minimizing the energy consumption of the modem. However, the very quick transition to idle state reduces or even eliminates the window in which the modem may receive a pending SMS or data message carrying SIM update information from the cellular network.

Optionally controlling the modem to enter RRC idle state and PSM or powering off the modem in step C and/or in step E includes controlling the modem to transmit a Release Assistance Indication (RAI). This has the effect of effectuating a very fast transition to idle mode whereby the energy consumption is minimized. The RAI is transmitted by the modem to the base station via the cellular network. Controlling the modem to enter RRC idle state and PSM may be effectuated by configuring the modem to automatically enter RRC idle state and PSM after step B has been executed.

Optionally the first data message further comprises data defining the second time period. This has the advantage that the second time period may be postponed to a future time period whereby time is allocated for preparing the SMS or data message containing SIM update information. Optionally the first data message further comprises data defining the second time period in the form of an absolute or relative time and/or a duration. The absolute or relative time may be a start time or an end time of the second time period. Defining an absolute or relative time for the second time period has the advantage that the transmission of SIM update information to a large population of utility meters may be spread in time to avoid congestion of the cellular network if all consumption meters connect to the cellular network simultaneously.

Optionally said duration of the second time period is longer than 30 seconds or preferably longer than 1 minute or even more preferably in the range of 1 - 180 minutes, such as 1 - 120 minutes such as 1-60 minutes, such as 1-30 minutes, such as 1-15 minutes. A duration of the second time period of at least one minute has the advantage that after the modem has connected to the cellular network there will be sufficient time for the servers holding the SMS or data message to be transmitted to detect that the modem is now connected and ready for receiving the information.

Extending the duration up to 180 minutes increases the chance that the SMS or data message will be successfully delivered to the modem.

Optionally the first data message is piggy backed on an acknowledge message confirming reception of the transmitted data. Piggy backing the first data message saves energy especially in the utility meter because an additional data packet does not need to be received since the acknowledge message would be sent in all cases. By piggy backing is understood that the data message is contained in the same data transmission as the acknowledge message. The data message may be contained in the payload of the acknowledge message. In other words the first data message is embedded in an acknowledge message. Or in other words the first data message is integrated in or combined with an acknowledge message.

Optionally a Tracking Area Update (TAU) timer is set in the modem in one or more of the steps A-E. Optionally said TAU timer is set with a time which extends beyond the regular or irregular interval. The TAU timer wakes up the modem and controls the modem to connect to the cellular network. However, setting the TAU timer with an interval which is longer than the interval by which data is transmitted the TAU timer will never lapse and the modem will not wake up unless when data shall be transmitted whereby energy is saved.

In a second aspect, the invention relates to a utility meter arranged for measuring consumption data, said utility meter comprising a modem for cellular communication, a battery for powering the utility meter and a microcontroller and a memory coupled with the microcontroller, the memory comprising executable instructions stored thereon that when executed by the microcontroller cause the processor to effectuate the method according to the first aspect of the invention.

Optionally the modem for cellular communication comprised in the utility meter is a cellular modem for NB-IoT and/or LTE-M communication.

Optionally the utility meter is a water meter, a thermal energy meter, a heat cost allocator or a gas meter.

In a third aspect, the invention relates to a sensor arranged for measuring physical parameter, said sensor comprising a modem for cellular communication, a battery for powering the sensor and a microcontroller and a memory coupled with the microcontroller, the memory comprising executable instructions stored thereon that when executed by the microcontroller cause the processor to effectuate the method according to the first aspect of the invention. Optionally the modem comprised in the sensor is a cellular modem for NB-IoT and/or LTE-M communication. Optionally the sensor is a pressure sensor, a temperature sensor, a turbidity sensor, an acoustic sensor for acoustic leak detection or a level sensor.

A fourth aspect of the invention relates to a use of the method according to the first aspect of the invention for Remote SIM provisioning (RSP). Use of the method according to the first aspect of the invention for Remote SIM provisioning (RSP) may optionally include one or more of the optional features described in connection with the first aspect of the invention. Optionally use of the method according to the first aspect of the invention for Remote SIM provisioning (RSP) may be as specified by GSMA in SGP.3x

The following terms shall all be understood as they are generally used and understood within the technical field of cellular communication as defined by the 3GPP / ETSI: Radio Resource Control (RRC), RRC connected state, RRC idle state, Power Saving Mode (PSM), Short Message Service (SMS), Subscriber Identity Module (SIM), Discontinuous Reception (DRX), Extended Discontinuous Reception (eDRX), Release Assistance Indication (RAI), Tracking Area Update (TAU).

The individual aspects of the present invention may each be combined with any of the other aspects. These and other aspects of the invention will be apparent from the following description with reference to the described embodiments.

### BRIEF DESCRIPTION OF THE FIGURES

The method according to the invention will now be described in more detail with regard to the accompanying figures. The figures show one way of implementing the present invention and is not to be construed as being limiting to other possible embodiments falling within the scope of the attached claim set.
Figure 1a shows an embodiment of a utility meter according to the invention in the form of a water meter;
Figure 1b shows the internal of the water meter in figure 1a;
Figure 2 shows a schematic illustration of the method according to the invention;
Figure 3 shows a timing diagram illustrating the interaction between a utility meter and a base station along with the Radio Resource Control (RRC) state of a modem for cellular communication.

### DETAILED DESCRIPTION OF AN EMBODIMENT

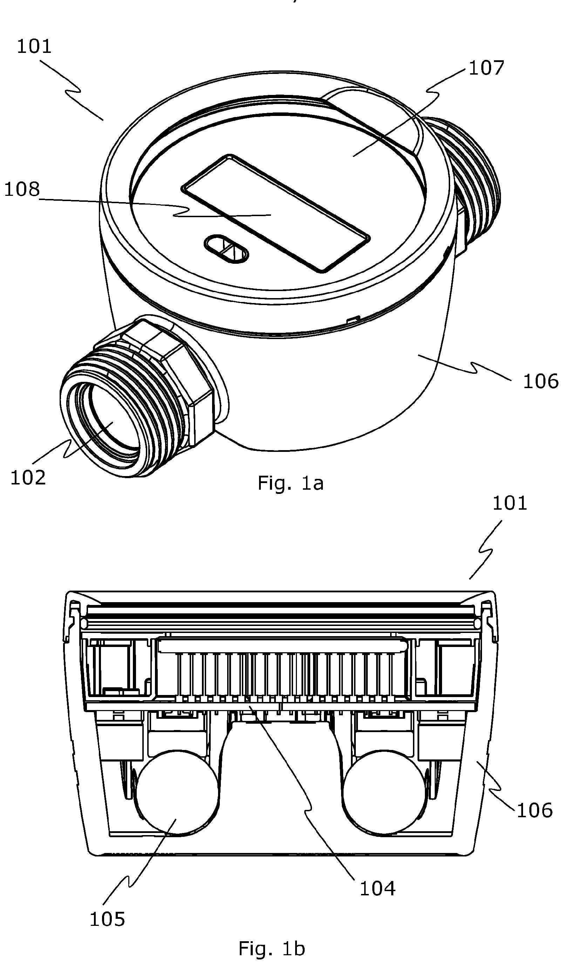

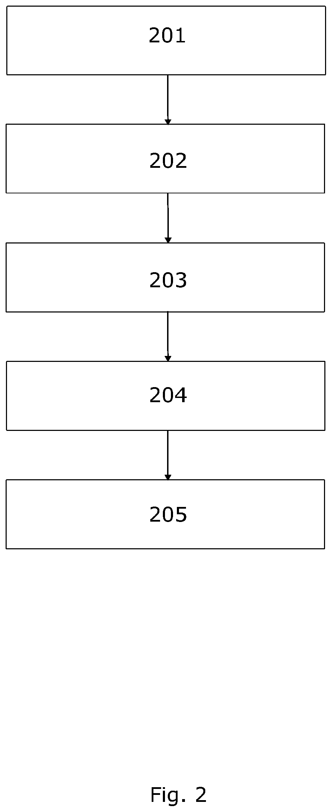

Referring now to fig. 1a and 1b is shown a utility meter 101 in the form of a water meter. The utility meter 101 is arranged to operate according to the method as illustrated in fig. 2. For the following detailed description of the method updating Subscriber Identity Module, SIM, information in a battery powered utility meter 101 it is to be noted that the utility meter could be any battery-operated utility meter such as a thermal energy meter, a gas meter, a heat cost allocator or a battery-operated sensor such as a pressure sensor, temperature sensor, turbidity sensor, acoustic sensor for acoustic leak detection etc. in the following just referred to as the utility meter.

The utility meter comprises a flow tube 102 for passage of a fluid, transducers for measuring flow and / or another physical parameter, a printed circuit board 104 to which the following elements are electrically connected: a measurement circuit, a modem for cellular communication with a cellular network, a controller in the form of a micro controller for controlling the measurement circuit and the modem and a battery 105 for supplying power to the measurement circuit, the modem and the micro controller. The utility meter 101 further comprises a hermetically closed housing 106 for protecting the electronic components from the humidity of the surroundings. The housing includes a transparent lid 107 allowing the readout of a display 108 arranged inside the housing 106.

The modem is a cellular communication module such as Quectel BC660K-GL, SierraWireless HL7810, Telit ME310Gx or ST Micro ST87M01 which are controlled by the controller via a serial communication interface connecting the controller to a steering interface of the modem. The modem is controlled by transmitting different AT commands to the steering interface, different types or brands of modems may have different steering interfaces.

The utility meter 101 further comprises a Subscriber Identity Module (SIM) in the form of a SIM card, a chip soldered onto the printed circuit board 104 of the meter (eSIM) or a software SIM. The SIM contains SIM information which relates to the subscription required to allow the modem to communicate via the cellular network. In case the SIM information needs to be updated, SIM update information will be transmitted to the modem via the cellular network. The SIM update information may be carried in an SMS message or in a data message such as an UDP or TCP data message. The modem will the transfer the received SIM update information to the SIM.

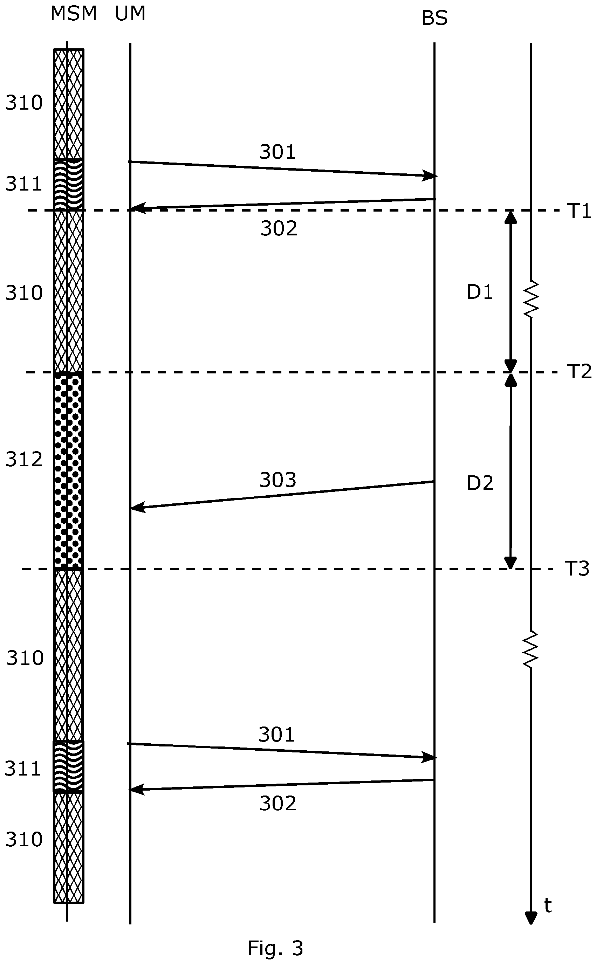

Now referring to fig. 2 and fig. 3 the operation of the utility meter is described. Reduction of energy consumption is a very important design criterion for the utility meter. Especially the modem has a high energy consumption when active and connected to the cellular network i.e. in Radio Resource Control (RRC) connected state. For that reason the modem of the utility meter is powered off or kept in RRC idle state and Power Saving Mode (PSM) 310 for the majority of the time. This is illustrated in the timing diagram of fig. 3 where the state and mode of the modem MSM in the utility meter UM is shown. As can be seen from fig. 3 the modem is powered off or kept in RRC idle state and PSM 310 in periods in between messages 301, 302, 303 are sent between the utility meter 101, UM and the base station BS.

In fig. 2 step 201 the modem is powered up and controlled to enter RRC connected state 311. The modem is controlled by the controller which comprises one or more timers for initiating step 201 with regular or irregular intervals. As an alternative, step 201 may be initiated when data, such as consumption data, sensor data, alarms etc. are available for transmission to a head end system. To enter RRC connected state 311 the modem must establish a connection to a base station of the cellular network.

It should be noted that for illustrative reasons fig. 3 is out of scale with respect to timing. Consequently, the length of periods MSM where the modem is powered off or kept in RRC idle state and PSM 310 are illustrated as being quite short in fig. 3 compared to the active periods 311, 312, however the periods where the modem is powered off or kept in RRC idle state and PSM 310 are much longer than the active periods 311, 312. By powering off the modem is understood to disconnect the energy supply / power supply from the modem.

In the next step 202 data 301 is transmitted to the head end system from the utility meter UM via the cellular network including the base station BS. When data has been successfully transferred from the utility meter to head end system a first data message 302 e.g. in the form of an acknowledge message 302 is sent to the utility meter UM from the head end system. The first data message is in one embodiment piggybacked on an acknowledge message.

It shall be noted that fig. 3 only shows the communication between the utility meter UM and the Base station BS. However, transmission of data 301 from the utility meter UM to the head end system may comprise multiple communication intermediate steps which are not illustrated in fig. 3. After the data 301 has been transmitted form the utility meter UM to the base station BS the data may be transmitted directly to from the base station BS to the head end systems or it may be transmitted from the base station to the head end system via one or more intermediate servers or cloud services. E.g. the data may be transmitted from the base station to a data base or cloud service where from the data is read by the head end system. The same applies mutatis mutandis to communication in the opposite direction 302, 303 from the head end system to the utility meter UM.

To minimize energy consumption the modem must be powered off or enter RRC idle state and PSM as soon as possible after the acknowledge message 302 has been received. Consequently in step 203 the modem is controlled by the controller to remain in RRC connected state only for the time required to transmit the data and receive an acknowledgement via the first data message 302. At the time point right after the first data message has been received T1 the modem is controlled by the controller to enter RRC idle state and PSM or it is being powered off 310. To ensure a quick transition to RRC idle state and PSM the modem may be controlled to transmit a Release Assistance Indication (RAI) to the base station. Further, the controller may set a Tracking Area Update (TAU) timer in the modem. The TAU timer is set to a time which extends beyond the regular or irregular interval for transmitting data to the head end system.

In the step 204 it is determined if the first data message comprises an indication that a Short Message Service (SMS) message 303 or a second data message 303 containing message containing Subscriber Identity Module, SIM, update information is to be received during a second time period D2. This determination is made by the controller by parsing the information in the first data message 302. The first data message 302 includes data such as a bit field or a number of data bytes which carry information related to said indication. The indication includes an absolute time and a duration defining a second time period D2 starting at time point T2 during which the second data message will be transmitted to the utility meter via the cellular network. In other words the time point T2 is an absolute point in time defined by the data in the first data message 302. As an alternative to the absolute time a relative time may be used. The relative time my refer to the time of receiving the first data message T1.

In case the first data message 302 includes abovementioned indication, the modem is controlled in step 205 to enter RRC idle state and/or one of Discontinuous Reception (DRX) mode 312 or Extended Discontinuous Reception (eDRX) mode 312, at time point T2. The modem will remain in RRC idle state and DRX or eDRX mode 312 during the second time period D2 except for time periods where the second data message 303 is being received. At the end T3 of the second time period D2 the controller will control the modem to enter RRC idle state and PSM or powering off the modem 310. As an alternative the controller may control the modem to enter RRC idle state and PSM or powering off the modem 310 right after the second data message 303 has been received.

It should be noted that that the modem is kept in RRC idle state and PSM or it is being powered off 310 during the period D1 in between reception of the first data message 302 and the point of time T2 for entering RRC idle sate and one of DRX and eDRX mode. However, the first time period may be so long that it may be interrupted by transmissions of data to the head end system 301 and reception of yet another acknowledge message 302. Such interruption should not make any changes to the first duration D1 of the first time period and the modem shall be controlled to enter RRC idle sate and one of DRX and eDRX mode after the abovementioned interruption. The same applies mutatis mutandis to the second time period D2.

The second data message contains SIM update information that the modem shall use for updating the SIM. The modem controls the update of the SIM via a communication interface between the modem and the SIM.

The second data message 303 is transmitted from the base station BS to the utility meter UM as illustrated in fig. 3. However the second data message and the SIM update information carried therein does not originate from the base station. Rather the second data message 303 is initiated by the service provider or a broker and may be transmitted via one or more intermediate servers or systems before it in a last step is transmitted from the base station BS to the utility meter UM as illustrated in fig. 3.

In a second embodiment of the invention a battery-operated sensor device which operates according to the method of the invention is provided. The sensor device may be a sensor for acoustic leak detection or a pressure sensor or a turbidity sensor, or a temperature sensor or any other type of sensor. The Sensor operates according to the method in the same way as described for the utility meter above. The main difference from the water meter as displayed in fig. 1 is the replacement of the water meters flow sensor with other types of sensors. The water meter of fig. 1 is an ultrasonic flow meter with an inlet and an outlet and being arranged for measuring the volume of water flowing between the inlet and the outlet. Other type of sensors may have an invasive or non-invasive sensor arranged to measure one or more physical properties of a utility flowing in a pipe or of the surroundings of the sensor.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for updating Subscriber Identity Module, SIM, information in a battery powered utility meter arranged for measuring consumption of a utility, said utility meter comprising a modem for cellular communication and a controller arranged for controlling the modem, the method comprising the steps of:
A: with regular or irregular intervals controlling the modem to connect to a cellular network whereby the modem enters Radio Resource Control, RRC, connected state;
B: when the modem is connected to the cellular network transmitting data to a head end system and receiving a first data message from the head end system via the cellular network;
C: controlling the modem to remain in RRC connected state for a first time period, said first time period having a duration being long enough to execute step B, and after step B has been executed further controlling the modem to enter RRC idle state and Power Saving Mode, PSM, or powering off the modem;
D: determining if the first data message comprises an indication that a Short Message Service, SMS, message or a second data message containing Subscriber Identity Module, SIM, update information is to be received by the modem via the cellular network during a second time period;
E: if the first data message comprises said indication, controlling the modem to enter RRC idle state and/or one of Discontinuous Reception, DRX, mode or Extended Discontinuous Reception, eDRX, mode, during the second time period and further controlling the modem to enter RRC idle state and PSM or powering off the modem, at the end of the second time period or after the SIM update information has been received during the second time period.

2. The method according to claim 1 wherein the modem for cellular communication is a cellular modem for NB-IoT and/or LTE-M communication and the cellular network is a network for NB-IoT and/or LTE-M communication.

3. The method according to any of the preceding claims wherein the modem is controlled to enter RRC idle state and PSM or the modem is powered off in step C less than 1 second or preferably less than 0.5 second or even more preferably less than 0.1 second after step B has been executed.

4. The method according to any of the preceding claims wherein controlling the modem to enter RRC idle state and PSM or powering off the modem in step C and/or in step E includes controlling the modem to transmit a Release Assistance Indication, RAI.

5. The method according to any of the preceding claims wherein the first data message further comprises data defining the second time period.

6. The method according to any of the preceding claims wherein the first data message further comprises data defining the second time period in the form of an absolute or relative time and/or a duration.

7. The method according to any of the preceding claims wherein said duration of the second time period is longer than 30 seconds or preferably longer than 1 minute or even more preferably in the range of 1 - 180 minutes, such as 1 - 120 minutes such as 1-60 minutes, such as 1-30 minutes, such as 1-15 minutes.

8. The method according to any of the preceding claims wherein the first data message is piggy backed on an acknowledge message confirming reception of the transmitted data.

9. The method according to any of the preceding claims wherein a Tracking Area Update, TAU, timer is set in the modem in one or more of the steps A-E.

10. The method according to claim 9 wherein said TAU timer is set with a time which extends beyond the regular or irregular interval.

11. A utility meter arranged for measuring consumption data, said utility meter comprising a modem for cellular communication, a battery for powering the utility meter and a microcontroller and a memory coupled with the microcontroller, the memory comprising executable instructions stored thereon that when executed by the microcontroller cause the processor to effectuate the method according to any of claims 1-10.

12. A utility meter according to claim 11 wherein the modem for cellular communication is a cellular modem for NB-IoT and/or LTE-M communication.

13. A utility meter according to any of claims 11-12 where the utility meter is a water meter, a thermal energy meter or a gas meter.
